# NEUE EUROPÄISCHE PATENTSCHRIFT

(11) **EP 1 493 064 B2**
(45) Veröffentlichungstag und Bekanntmachung des Hinweises auf die Entscheidung über den Einspruch: **02.11.2011**
(45) Hinweis auf die Patenterteilung: 11.01.2006
(21) Anmeldenummer: 03709803.5
(22) Anmeldetag: 20.03.2003
(51) Int. Cl.: G05B 9/03

(54) **VORRICHTUNG ZUM FEHLERSICHEREN ABSCHALTEN EINES ELEKTRISCHEN VERBRAUCHERS, INSBESONDERE IN INDUSTRIELLEN PRODUKTIONSANLAGEN**
DEVICE FOR THE ERROR-PROOF SWITCHING OFF OF AN ELECTRIC CONSUMER, PARTICULARLY IN INDUSTRIAL PRODUCTION PLANTS
APPAREIL DE COUPURE, PROTEGEE CONTRE LES ERREURS, D'UN CONSOMMATEUR ELECTRIQUE, NOTAMMENT DANS LES INSTALLATIONS DE PRODUCTION INDUSTRIELLE

(30) Priorität: 08.04.2002 DE 10216226
(43) Veröffentlichungstag der Anmeldung: 05.01.2005
(73) Patentinhaber: Pilz GmbH & Co. KG, 73760 Ostfildern (DE)
(72) Erfinder: PULLMANN, Jürgen, 73061 Ebersbach (DE); EHRLICH, Gerhard, 73262 Reichenbach (DE)
(74) Vertreter: Duhme, Torsten
(86) Internationale Anmeldenummer: PCT/EP2003/002903
(87) Internationale Veröffentlichungsnummer: WO 2003/085313

(56) Entgegenhaltungen:
- EP-A- 0 600 311
- WO-A-01/67610
- DE-A- 10 037 737
- DE-A- 10 045 651
- DE-C- 10 127 233
- SIEMENS: 'Elektronische Sicherheitskombination und Vebraucherabzweige' SAFETY INTEGRATED 2001 - 2001,

## Beschreibung

Die vorliegende Erfindung betrifft eine Vorrichtung zum fehlersicheren Abschalten eines elektrischen Verbrauchers, insbesondere in industriellen Produktionsanlagen, mit einem ersten und zumindest einem zweiten Sicherheitsschaltgerät, wobei das erste Sicherheitsschaltgerät eine erste Auswerte- und Steuereinheit, einen Ausgang und ein elektronisches Schaltelement aufweist, das in Abhängigkeit von der ersten Auswerte- und Steuereinheit ein potentialbezogenes Schaltsignal an dem Ausgang erzeugt, wobei das zweite Sicherheitsschaltgerät eine zweite Auswerte- und Steuereinheit sowie einen Eingang aufweist, der mit der zweiten Auswerte- und Steuereinheit und mit dem Ausgang des ersten Sicherheitsschaltgeräts verbunden ist.

Die Erfindung betrifft ferner Sicherheitsschaltgeräte zur Verwendung in einer solchen Vorrichtung, die einerseits einen Eingang zum Aufnehmen eines potentialbezogenen Schaltsignals sowie eine Auswerte- und Steuereinheit aufweisen, die mit dem Eingang verbunden ist.

Eine solche Vorrichtung und entsprechende Sicherheitsschaltgeräte sind aus der WO 01/67610 A1 bekannt.

Sicherheitsschaltgeräte der hier verwendeten Art werden vor allem in industriellen Produktionsumgebungen verwendet, um Maschinen, wie bspw. eine hydraulische Presse oder ein Fräswerkzeug, zuverlässig und sicher abzuschalten, wenn dies für die Sicherheit von Bedienpersonen oder aus anderen Gründen erforderlich ist. Die gattungsgemäßen Sicherheitsschaltgeräte besitzen einen oder mehrere Eingänge, an die Stellelemente wie bspw. Not-Aus-Taster, Zwei-Hand-Taster, Schutztüren oder Lichtschranken angeschlossen werden können. Die Auswerte- und Steuereinheit wertet die Eingangssignale dieser Stellglieder auf fehlersichere Art und Weise aus und erzeugt in Abhängigkeit davon wiederum auf fehlersichere Art und Weise ein ausgangsseitiges Schaltsignal. Dieses Schaltsignal betätigt Aktoren, insbesondere Schütze, mit denen die Maschine wiederum fehlersicher abgeschaltet wird.

Der Begriff "fehlersicher" bedeutet in diesem Zusammenhang, daß ein Abschalten der Maschine unter allen Umständen gewährleistet sein muß, und zwar auch dann, wenn innerhalb der Kette aus Stellelement, Sicherheitsschaltgerät und Aktor ein Funktionsfehler auftritt. Sicherheitsschaltgeräte müssen daher so ausgelegt sein, daß auch bei Ausfall eines Bauelements, bei Kabelbrüchen oder bei anderen Funktionsstörungen stets ein sicherer Zustand der überwachten Maschine gewährleistet ist. Dementsprechend werden mit dem Begriff Sicherheitsschaltgerät hier nur solche Einrichtungen und Geräte bezeichnet, die zumindest die Kategorie 3 der europäischen Norm EN 954-1 oder vergleichbare Anforderungen erfüllen.

Konventionell wurden und werden gattungsgemäße Sicherheitsschaltgeräte bis heute vielfach mit diskreten Bauteilen und mit elektromechanischen Schaltelementen (Relais) aufgebaut. Erst seit wenigen Jahren geht man dazu über, Sicherheitsschaltgeräte auch unter Verwendung elektronischer Bauelemente und insbesondere elektronischer Schaltelemente (Bipolar- und/oder Feldeffekttransistoren) aufzubauen. In der WO 01/67610 A1 sind Sicherheitsschaltgeräte sowie Vorrichtungen mit kombinierten Sicherheitsschaltgeräten beschrieben, die am Ausgang potentialbezogene Schaltsignale liefern. Im Gegensatz dazu verwenden die herkömmlichen Sicherheitsschaltgeräte potentialfreie Ausgänge. Aufgrund der potentialbezogenen Ausgänge ist es mit den Sicherheitsschaltgeräten der WO 01/67610 A1 nicht mehr sinnvoll, die Ausgänge mehrerer Sicherheitsschaltgeräte in einer Reihe miteinander zu verschalten, um ein Sicherheitsschaltgeräte-System zu erhalten. Die WO 01/67610 A1 schlägt daher eine neue Möglichkeit vor, um Sicherheitsschaltgeräte mit potentialbezogenen Ausgängen zu einem System zu kombinieren. Dabei werden die potentialbezogenen Ausgänge eines ersten Sicherheitsschaltgerätes mit speziellen Eingängen eines nachfolgenden, zweiten Sicherheitsschaltgerätes verbunden. Insgesamt ergibt sich dadurch eine Vorrichtung, die sehr flexibel und vielseitig einsetzbar ist. Bei der bekannten Vorrichtung ist es allerdings zum Erreichen einer maximalen Fehlersicherheit erforderlich, jeweils zumindest zwei potentialbezogene Ausgänge des ersten Sicherheitsschaltgerätes parallel mit zumindest zwei entsprechenden Eingängen des zweiten Sicherheitsschaltgerätes zu verbinden.

Aus der DE 100 37 737 A1 sind ein Verfahren und eine Vorrichtung zur sicheren einkanaligen Auswertung von Sensorsignalen bekannt. Dabei werden aus redundant erzeugten Sensorsignalen weitere Redundanzsignale abgeleitet. Sämtliche Signale werden anschließend digitalisiert, in ein einkanaliges digitales Signal umgesetzt und an eine übergeordnete Verarbeitungseinheit übertragen. Das beschriebene Verfahren ist jedoch nicht geeignet, um mehrere Sicherheitsschaltgeräte der oben beschriebenen Art zu einem System von Sicherheitsschaltgeräten zu kombinieren, wie es aus der WO 01/67610 A1 bekannt ist.

Es ist daher eine Aufgabe der vorliegenden Erfindung, die eingangs beschriebene Vorrichtung mit kombinierten Sicherheitsschaltgeräten derart weiterzubilden, daß ein einfacherer und schnellerer Aufbau und damit eine schnellere Installation in einer Produktionsanlage möglich ist. Es ist ferner Aufgabe der Erfindung, entsprechend geeignete Sicherheitsschaltgeräte anzugeben.

Diese Aufgabe wird durch eine Vorrichtung nach Anspruch 1 und ein Sicherheitsschaltgerät nach Anspruch 12 gelöst. Dementsprechend genügt es, wenn der Ausgang des ersten Sicherheitsschaltgerätes einkanalig zum Anschluß an eine einkanalige Verbindungsleitung ausgelegt und mit einem modulator verbunden ist, der das potentialbezogene Schaltsignal mit einem statischen und einem dynamischen Signalanteil versieht. Das zweite Sicherheitsschaltgerät ist dadurch gekennzeichnet, daß zumindest zwei Eingangskreise vorhanden sind, denen das potentialbezogene Schaltsignal von dem einen Eingang redundant zueinander zugeführt ist.

Die Erfindung beruht auf der überraschenden Erkenntnis, daß bei der eingangs beschriebenen Vorrichtung eine ausreichende Fehlersicherheit auch mit einer einkanaligen Verbindungsleitung zwischen dem ersten und zweiten Schaltgerät gewährleistet werden kann. Dies war im vorhinein nicht zu erwarten, da bei der Auslegung und Konstruktion von Sicherheitsschaltvorrichtungen grundsätzlich eine durchgehende Redundanz in allen Schaltungsbestandteilen für erforderlich gehalten wurde. Im vorliegenden Fall kann die Verbindungsleitung zwischen den beiden Sicherheitsschaltgeräten jedoch einkanalig ausgeführt werden, da sicherheitskritische Situationen in Folge von Bauteilversagen und dergleichen anderweitig abgefangen werden. Werden nämlich an die einkanalige Verbindungsleitung zusätzlich zu dem zweiten Sicherheitsschaltgerät noch ein oder mehrere Schütze angeschlossen, kann das Ein- und Abschalten der Schütze dadurch fehlersicher überwacht werden, daß die zwangsgeführten Hilfskontakte der Schütze in an sich bekannter Weise auf einen Eingang des ersten Sicherheitsschaltgerätes zurückgeführt werden. Es ist in diesem Fall nicht erforderlich, die Schütze an zwei getrennte, redundante Verbindungsleitungen anzuschließen.

Werden demgegenüber in einer praktischen Realisierung keine Schütze an die einkanalige Verbindungsleitung angeschlossen, entfällt diese Möglichkeit, das potentialbezogene Schaltsignal am Ausgang des ersten Schaltgeräts zu überwachen. Es hat sich jedoch gezeigt, daß auf eine solche Überwachung in diesem Fall auch verzichtet werden kann, da ein Schaltvorgang nur noch am Ausgang des zweiten Sicherheitsschaltgerätes erfolgt. Es genügt daher, das potentialbezogene Schaltsignal auf fehlersichere Art und Weise, d.h. in aller Regel zweikanalig, am Eingang des zweiten Schaltgerätes auszuwerten. Dementsprechend weist das zweite Sicherheitsschaltgerät hier die zumindest zwei zueinander redundanten Eingangskreise auf.

Bei der neuen Vorrichtung sind das erste und das zweite Sicherheitsschaltgerät daher nur noch über die einkanalige Verbindungsleitung miteinander verbunden, wodurch der Verdrahtungsaufwand bei der Installation reduziert wird. Dementsprechend ist die Installation einfacher und schneller möglich. Darüber hinaus benötigt das erste Sicherheitsschaltgerät weniger Ausgangsanschlüsse und das zweite Sicherheitsschaltgerät weniger Eingangsanschlüsse. Infolgedessen kann die Baugröße der Sicherheitsschaltgeräte verkleinert werden oder es stehen bei gleicher Baugröße zusätzliche Anschlüsse für andere Verwendungen zur Verfügung. Die vorliegende Erfindung führt daher auch zu einer Kostenreduktion bei der Konstruktion und Produktion von erfindungsgemäßen Sicherheitsschaltgeräten. Ferner ist das zweite Sicherheitsschaltgerät in der Lage, sowohl einen statischen als auch einen dynamischen Signalanteil des potentialbezogenen Schaltsignals auszuwerten. Dementsprechend ist das zweite Sicherheitsschaltgerät in dieser Ausgestaltung besonders geeignet, um redundante Signalinformationen, die von dem ersten Sicherheitsschaltgerät einkanalig übertragen werden, vollständig auszuwerten. Die Maßnahme stellt eine weitere, einfache Möglichkeit dar, um die gewünschte Fehlersicherheit der Gesamtanordnung zu gewährleisten. Darüber hinaus erfolgt die Auswertung in dieser Ausgestaltung diversitär, was bekanntermaßen zu einer noch höherer Fehlersicherheit führt.

Die genannte Aufgabe ist daher vollständig gelöst.

In einer bevorzugten Ausgestaltung weist das erste Sicherheitsschaltgerät einen Modulator auf, der das potentialbezogene Schaltsignal mit einem statischen Signalanteil und einem dynamischen Signalanteil versieht.

In dieser Ausgestaltung ist das erste Sicherheitsschaltgerät in der Lage, dem nur einkanalig übertragenen Schaltsignal zwei eigenständige Signalinformationen aufzuprägen. Hierdurch ist es möglich, trotz der nur einkanaligen Verbindungsleitung zueinander redundante Informationen an das zweite Sicherheitsschaltgerät zu übertragen. Dies ist für eine fehlersichere Realisierung selbst nach der (höchsten) Sicherheitskategorie 4 der europäischen Norm EN 954-1 aus den bereits oben erläuterten Gründen zwar nicht zwingend erforderlich, es erleichtert jedoch eine derartige Realisierung. Insbesondere kann in dieser Ausgestaltung eine größere Flexibilität bei der externen Beschaltung der Sicherheitsschaltgeräte mit Aktoren, insbesondere Schützen, zugelassen werden. Dadurch vereinfacht sich die Installation der neuen Vorrichtung noch weiter.

In einer weiteren Ausgestaltung ist der statische Signalanteil ein positiver Signalpegel und der dynamische Signalanteil beinhaltet zumindest einen zyklisch wiederkehrenden Impuls, der den positiven Signalpegel verändert. Grundsätzlich kann der Impuls positiv oder negativ sein. Bevorzugt ist die Dauer des zyklisch wiederkehrenden Impulses sehr kurz im Vergleich zu der Dauer, während der das potentialbezogene Schaltsignal den positiven Signalpegel aufweist. In praktischen Versuchen haben sich Impulsdauern von 1 ms und weniger als vorteilhaft erwiesen.

Diese Ausgestaltung erlaubt es, Schütze direkt, d.h. ohne weitere Interface-Schaltungen, an die einkanalige Verbindungsleitung zwischen dem ersten und dem zweiten Sicherheitsschaltgerät anzuschließen. Das zweite Sicherheitsschaltgerät und ggf. weitere nachfolgende Sicherheitsschaltgeräte können damit Schaltvorgänge auslösen, die die genannten Schütze nicht beeinflussen. Dies ermöglicht den einfachen Aufbau einer hierarchischen Steuerung, mit der verschiedene Teile einer Gesamtanlage in unterschiedlichen Gruppen abgeschaltet werden können. So ist es bspw. möglich, bei Betätigung eines Not-Aus-Schalters, der am ersten Schaltgerät angeschlossen ist, die gesamte Maschinenanlage stromlos zu machen, während beim Öffnen einer Schutztür, die an einem zweiten Sicherheitsschaltgerät angeschlossen ist, nur ein Ventil oder ein einzelner Antrieb abgeschaltet wird. Solange die Dauer eines einzelnen Impulses kurz gegenüber der Abfallzeit der verwendeten Schütze ist, wird die Schaltfunktion der Schütze durch den dynamischen Signalanteil selbst dann nicht beeinflußt, wenn die Impulse negativ sind.

In einer weiteren Ausgestaltung weisen die zumindest zwei Eingangskreise des zweiten Sicherheitsschaltgerätes zumindest zwei zueinander redundante Schwellwertvergleicher auf.

In dieser Ausgestaltung wertet das zweite Sicherheitsschaltgerät im wesentlichen den statischen Signalanteil, insbesondere den anliegenden Signalpegel des potentialbezogenen Schaltsignals, aus. Aufgrund der Redundanz erfolgt diese Auswertung hier in einer Art und Weise, die die Anforderungen der Kategorie 4 der EN 954-1 erfüllt. Die Maßnahme stellt eine einfache und kostengünstige Möglichkeit dar, um trotz der nur einkanaligen Verbindungsleitung eine hohe Fehlersicherheit zu erreichen.

In einer weiteren Ausgestaltung weist das erste Sicherheitsschaltgerät zumindest einen Schwellwertvergleicher, bevorzugt sogar zumindest zwei zueinander redundante Schwellwertvergleicher, auf. Dem bzw. den Schwellwertvergleichern ist/sind eingangsseitig das potentialbezogene Schaltsignal zugeführt und ausgangsseitig sind sie mit der ersten Auswerte- und Steuereinheit verbunden.

In dieser Ausgestaltung ist das erste Sicherheitsschaltgerät in der Lage, den Pegel des potentialbezogenen Schaltsignals am Ausgang eigenständig zu überwachen. In der bevorzugten Ausgestaltung erfolgt dies aufgrund der zueinander redundanten Schwellwertvergleicher sogar gemäß den Anforderungen der Kategorie 4 der EN 954-1. Die Ausgestaltung vereinfacht den Anschluß von externen Schützen an die einkanalige Verbindungsleitung, da entsprechend weniger externe Sicherungsmaßnahmen durchgeführt werden müssen.

In einer weiteren Ausgestaltung sind an die einkanalige Verbindungsleitung ferner zumindest zwei externe Schaltelemente, insbesondere Schütze, angeschlossen.

In dieser Ausgestaltung macht die neue Vorrichtung von den bereits oben erläuterten Vorteilen Gebrauch. Die Ausgestaltung ermöglicht den einfachen Aufbau einer hierarchischen Steuerung, bei der die einzelnen Hierarchieebenen allein durch die Position der externen Schaltelemente in der Kette der Sicherheitsschaltgeräte bestimmt wird. Im Vergleich zu komplexen Sicherheitssteuerungen entfällt jeglicher Programmieraufwand.

In einer weiteren Ausgestaltung sind die externen Schaltelemente elektromechanische Schaltelemente mit jeweils zumindest zwei durch eine Zwangsführung verbundenen Schaltkontakten.

Auch diese Ausgestaltung knüpft an die bereits oben erläuterten Vorteile an. Die zwangsgeführten Hilfskontakte können in dieser Ausgestaltung sehr einfach für eine zusätzliche Rückkopplung auf den Eingang des ersten Sicherheitsschaltgerätes genutzt werden, wodurch die Fehlersicherheit der gesamten Vorrichtung weiter erhöht ist.

In einer weiteren Ausgestaltung ist jeweils einer der durch die Zwangsführung verbundenen Schaltkontakte auf einen Eingang des ersten Sicherheitsschaltgerätes verbunden.

Diese Ausgestaltung macht von den durch die zwangsgeführten Hilfskontakte gegebenen Möglichkeiten in vorteilhafter Weise Gebrauch. Daher kann in besonders einfacher Weise eine Vorrichtung realisiert werden, die den Anforderungen der (höchsten) Sicherheitskategorie 4 der EN 954-1 oder vergleichbaren Anforderungen genügt.

In einer weiteren Ausgestaltung sind die externen Schaltelemente getrennt von dem ersten Sicherheitsschaltgerät mit einem Bezugspotential verbunden.

In dieser Ausgestaltung sind die externen Schaltelemente getrennt von dem ersten Sicherheitsschaltgerät an eine Masseschiene oder dergleichen angeschlossen. Alternativ hierzu ist es grundsätzlich möglich und in der Praxis durchaus verbreitet, externe Schaltelemente über eine Klemme des ersten Sicherheitsschaltgerätes mit dem Bezugspotential (Masse) zu verbinden. Die bevorzugte Ausgestaltung bietet demgegenüber eine erhöhte Sicherheit, da in diesem Fall selbst ohne zusätzliche Sicherheitsmaßnahmen, wie bspw. die Verwendung redundanter Signalinformationen, eine unbeabsichtigte Schaltreaktion des zweiten Sicherheitsschaltgerätes ausgeschlossen ist. Die Fehlersicherheit der gesamten Vorrichtung wird hierdurch weiter erhöht.

In einer weiteren Ausgestaltung weist das zweite Sicherheitsschaltgerät zumindest einen weiteren Eingang zum Aufnehmen eines weiteren Schaltsignals sowie eine Verknüpfungseinheit auf, die das weitere Schaltsignal mit dem potentialbezogenen Schaltsignal logisch verknüpft.

Die logische Verknüpfung ist bevorzugt eine UND-Verknüpfung, sie kann aber auch eine ODER-Verknüpfung oder eine andere logische Verknüpfung sein. Das zweite Sicherheitsschaltgerät verknüpft das weitere Schaltsignal, das bspw. von einem externen Stellelement oder einem anderen Sicherheitsschaltgerät erzeugt wird, mit dem potentialbezogenen Schaltsignal des ersten Sicherheitsschaltgerätes. In dieser Ausgestaltung ist eine besonders flexible und variantenreiche Realisierung der neuen Vorrichtung möglich.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel einer erfindungsgemäßen Vorrichtung in einer schematischen Darstellung,
- Fig. 2: Details des ersten und zweiten Sicherheitsschaltgerätes in dem Ausführungsbeispiel gemäß Fig. 1, und
- Fig. 3: Details eines ersten und zweiten Sicherheitsschaltgerätes.

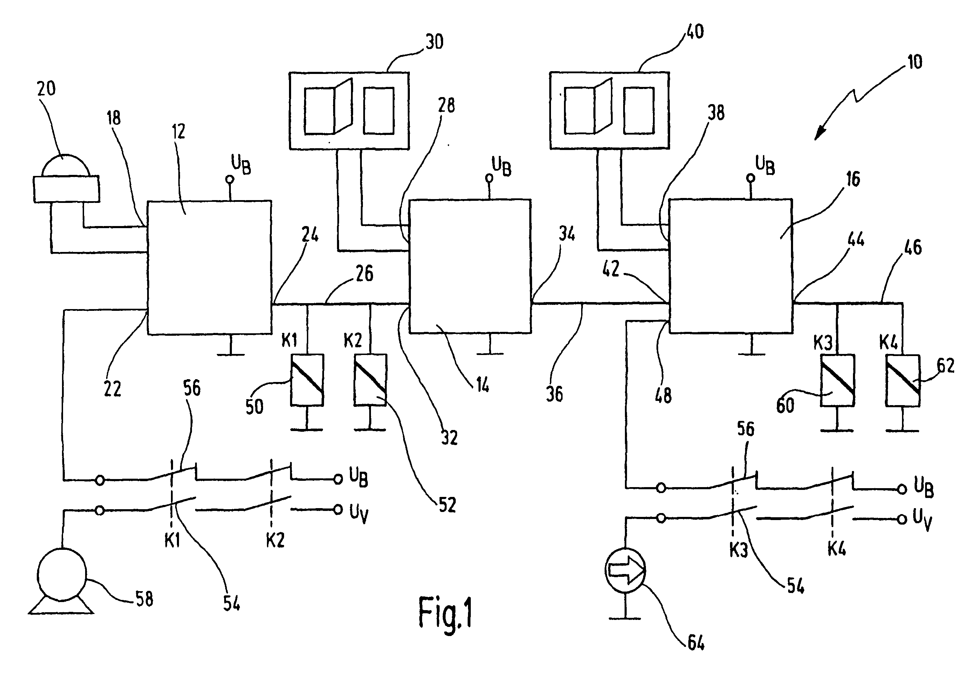

In Fig. 1 ist eine erfindungsgemäße Vorrichtung in ihrer Gesamtheit mit der Bezugsziffer 10 bezeichnet.

Die Vorrichtung 10 beinhaltet im vorliegenden Ausführungsbeispiel drei Sicherheitsschaltgeräte 12, 14, 16, die in der nachfolgend erläuterten Weise zu einem Sicherheitsschaltgeräte-System kombiniert sind. Das Sicherheitsschaltgerät 12 ist ein erstes Sicherheitsschaltgerät in der Terminologie der vorliegenden Erfindung. Es besitzt einen Eingang 18, an dem hier ein Not-Aus-Taster 20 zweikanalig angeschlossen ist. Ein weiterer Eingang ist mit der Bezugsziffer 22 bezeichnet. Hier ist in der nachfolgend näher beschriebenen Art und Weise ein Rückführsignal angeschlossen.

Das Sicherheitsschaltgerät 12 besitzt des weiteren einen einkanaligen Ausgang 24, an dem eine einkanalige Verbindungsleitung 26 angeschlossen ist.

Das Sicherheitsschaltgerät 14 ist im Grundsatz ähnlich aufgebaut wie das Sicherheitsschaltgerät 12. Es unterscheidet sich von letzterem jedoch in Details, insbesondere dadurch, daß es hier zum Anschluß einer Schutztür ausgebildet ist. Hierzu besitzt das Sicherheitsschaltgerät 14 einen Eingang 28, an den eine Schutztür 30 zweikanalig angeschlossen ist. Ein weiterer Eingang ist mit der Bezugsziffer 32 bezeichnet. Der Eingang 32 ist einkanalig ausgebildet und über die Verbindungsleitung 26 mit dem Ausgang 24 des Sicherheitsschaltgerätes 12 verbunden.

Dementsprechend ist das Sicherheitsschaltgerät 14 hier ein zweites Sicherheitsschaltgerät in der Terminologie der vorliegenden Erfindung. Darüber hinaus besitzt das Sicherheitsschaltgerät 14 hier jedoch auch die Funktion eines ersten Sicherheitsschaltgerätes im Sinne der vorliegenden Erfindung, da es dem Sicherheitsschaltgerät 16 wiederum vorgeschaltet ist.

Das Sicherheitsschaltgerät 14 besitzt dementsprechend ebenfalls einen einkanaligen Ausgang, der hier mit der Bezugsziffer 34 bezeichnet ist. An den Ausgang 34 ist eine wiederum einkanalige Verbindungsleitung 36 angeschlossen.

Das Sicherheitsschaltgerät 16 entspricht in seinem Aufbau dem Sicherheitsschaltgerät 14. Es ist im vorliegenden Ausführungsbeispiel ebenfalls ein Schutztürüberwachungsgerät. Dementsprechend besitzt es einen Eingang 38, an den hier wiederum zweikanalig eine Schutztür 40 angeschlossen ist. Ein weiterer Eingang ist mit der Bezugsziffer 42 bezeichnet. Der Eingang 42 ist einkanalig ausgebildet und über die Verbindungsleitung 36 mit dem Ausgang 34 des Sicherheitsschaltgerätes 14 verbunden. Ein einkanaliger Ausgang des Sicherheitsschaltgerätes 16 ist mit der Bezugsziffer 44 bezeichnet. An den Ausgang 44 ist eine einkanalige Verbindungsleitung 46 angeschlossen. Ein weiterer Eingang ist mit der Bezugsziffer 48 bezeichnet. Hier ist in nachfolgend näher erläuterter Weise eine Rückführung angeschlossen.

Die Ausbildung der Sicherheitsschaltgeräte 12, 14, 16 als Not-Aus- bzw. Schutztürüberwachungsgeräte ist hier beispielhaft zu verstehen. Es könnte sich hier ebenfalls um Zwei-Hand-Taster-Überwachungsgeräte, Drehzahlüberwachungsgeräte, Lichtschrankenüberwachungsgeräte oder beliebige andere sicherheitsgerichtete Schaltgeräte handeln. Darüber hinaus könnten die Schaltgeräte auch eine integrierte Sensorfunktion haben. Beispielsweise könnte das erste Sicherheitsschaltgerät die Ausgangsstufe einer Lichtschranke sein.

Alle genannten Sicherheitsschaltgeräte besitzen in der Praxis weitere Eingänge und Ausgänge, die hier der Übersichtlichkeit halber nicht alle dargestellt sind. Unter anderem dienen diese Eingänge zum Anlegen einer Betriebsspannung U_{B} sowie zum Anlegen eines Bezugspotentials (Masse). Darüber hinaus besitzt bspw. das Sicherheitsschaltgerät 14 einen weiteren hier nicht gezeigten Eingang, der dem Eingang 22 bzw. 48 der Schaltgeräte 12 und 16 entspricht.

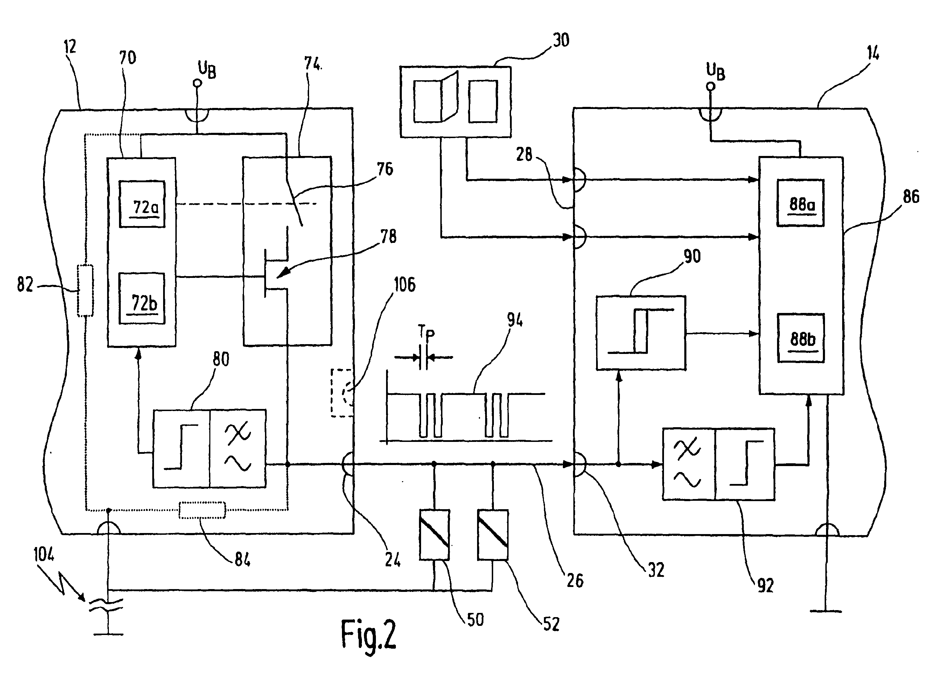

In dem dargestellten Ausführungsbeispiel sind an die einkanalige Verbindungsleitung 26 zwei Schütze K1 und K2 parallel angeschlossen. Diese werden im weiteren mit den Bezugsziffern 50 und 52 bezeichnet. Der zweite Anschluß der Schütze 50, 52 ist getrennt vom ersten Sicherheitsschaltgerät 12 mit dem Bezugspotential (Masse) verbunden. Bei dem hier dargestellten Ausführungsbeispiel ist diese Realisierung nicht unbedingt erforderlich. Die Schütze 50, 52 könnten hier auch mit dem Masseanschluß des Sicherheitsschaltgeräts 12 verbunden sein wie dies in Fig. 2 gezeigt ist.

Die Schütze 50, 52 besitzen jeweils zumindest einen Hauptkontakt 54 und einen Hilfskontakt 56, die in an sich bekannter Weise starr miteinander verbunden sind (zwangsgeführte Kontakte). Der Hauptkontakt 54 ist, wie üblich, als Schließer ausgebildet, der Hilfskontakt 56 als Öffnerkontakt. Die Hauptkontakte 54 der Schütze 50, 52 sind in Reihe zueinander angeordnet.

An einem Ende der Reihenschaltung ist ein abzuschaltendes Element, bspw. ein Pumpenantrieb für eine hydraulische Presse, angeschlossen. Am anderen Anschluß der Reihenschaltung liegt eine Versorgungsspannung Uᵥ für den Pumpenantrieb an. Diese kann mit Hilfe der Hauptkontakte 54 der Schütze 50, 52 fehlersicher abgeschaltet werden.

Die Hilfskontakte 56 der Schütze 50, 52 sind ebenfalls in Reihe geschaltet. An einem Ende dieser Reihenschaltung liegt die Betriebsspannung U_{B} an. Das andere Ende dieser Reihenschaltung ist mit dem Eingang 22 des Sicherheitsschaltgerätes 12 verbunden. Aufgrund der Zwangsführung der Kontakte kann das Sicherheitsschaltgerät 12 die Schaltstellung der Schütze 50, 52 überprüfen.

In ähnlicher Weise sind an die Verbindungsleitung 46 am Ausgang des Schaltgeräts 16 zwei weitere Schütze K3, K4 parallel angeschlossen. Die Schütze K3, K4 werden nachfolgend mit den Bezugsziffern 60, 62 bezeichnet. Die Haupt- und Hilfskontakte 54 bzw. 56 der Schütze 60, 62 sind wiederum in Reihe geschaltet. Die Hauptkontakte 54 sind mit einem weiteren abzuschaltenden Element, hier bspw. einem Ventil 64, sowie einer Versorgungsspannung Uᵥ verbunden. Die Hilfskontakte 56 führen ähnlich wie beim Schaltgerät 12 eine Betriebsspannung U_{B} an den Eingang 48 des Sicherheitsschaltgerätes 16 zurück.

Die Vorrichtung 10 dient hier zum sicheren Abschalten einer hydraulischen Presse. Wird der Not-Aus-Taster 20 betätigt, schalten die Schütze 50, 52 den Pumpenantrieb 58 ab, d.h. die Presse (hier nicht dargestellt) wird vollständig stillgesetzt. Wird hingegen eine der beiden Schutztüren 30, 40 geöffnet, wird über die beiden Schütze 60, 62 nur das Ventil 64 abgeschaltet (geschlossen). Der Pumpenantrieb 58 bleibt in diesem Fall in Betrieb. Die Vorrichtung 10 realisiert daher ohne aufwendige Programmiermaßnahmen eine hierarchische Steuerung, bei der verschiedene Stellelemente unterschiedliche Funktionsbereiche der überwachten Presse beeinflussen.

Es versteht sich, daß die Vorrichtung 10 in anderen Ausführungsbeispielen wesentlich mehr Sicherheitsschaltgeräte 12, 14, 16 beinhalten kann, die mit zahlreichen Stellelementen und Sensoren (Not-Aus-Taster, Zwei-Hand-Taster, Schutztüren, Drehgeber etc.) sowie Aktoren (Schützen oder dergleichen) kombiniert sind. Charakteristisch ist dabei die Möglichkeit, die Schaltgeräte untereinander über einkanalige Verbindungsleitungen 26, 36, 46 zu verbinden. Je nach Bedarf können an die einkanaligen Verbindungsleitungen Aktoren angeschlossen werden, wie dies in Fig. 1 am Beispiel der Schütze 50, 52 bzw. 60, 62 gezeigt ist.

Bei der nachfolgenden Beschreibung von weiteren Details der Vorrichtung 10 sowie weiteren Ausführungsbeispielen bezeichnen gleiche Bezugszeichen dieselben Elemente wie in Fig. 1.

In Fig. 2 sind die Schaltgeräte 12 und 14 mit einigen Details schematisch dargestellt, wobei hier beim Schaltgerät 12 aus Gründen der Übersichtlichkeit im wesentlichen der ausgangsseitige Teil dargestellt ist, während beim Schaltgerät 14 der eingangsseitige Teil gezeigt ist.

Das Sicherheitsschaltgerät 12 besitzt eine zweikanalige Auswerte- und Steuereinheit 70, die gemäß einem bevorzugten Ausführungsbeispiel zwei diversitäre Mikroprozessoren 72a, 72b beinhaltet. Mit der Bezugsziffer 74 ist eine Schaltelementekombination bezeichnet, die hier aus der Reihenschaltung eines elektromechanischen Schaltelements (Relais 76) und eines elektronischen Schaltelements (Feldeffekttransistor 78) gebildet ist. Statt des Relais könnte hier grundsätzlich auch ein weiteres elektronisches Schaltelement verwendet sein. Des weiteren können die elektronischen Schaltelemente auch bipolare Transistoren sein.

Mit der Bezugsziffer 80 ist ein Schwellwertvergleicher bezeichnet, der in dem hier dargestellten Ausführungsbeispiel außerdem ein vorgeschaltetes Tiefpaßfilter beinhaltet. Mit Hilfe des Schwellwertvergleichers 80 kann die Auswerte- und Steuereinheit 70 den statischen Signalpegel des Schaltsignals am Ausgang 24 des Sicherheitsschaltgerätes 12 überwachen.

Mit der Bezugsziffer 82 ist hier symbolisch der Innenwiderstand des Sicherheitsschaltgerätes 12 dargestellt. Wie dem Fachmann bekannt ist, ist dieser Innenwiderstand nicht als ein einzelnes körperliches Element in dem Sicherheitsschaltgerät 12 vorhanden, sondern er ergibt sich als resultierende Größe aus der Gesamtheit aller vorhandenen Komponenten. Der Innenwiderstand 82 spielt eine Rolle bei der nachfolgenden Analyse möglicher Fehler, die die Fehlersicherheit der Vorrichtung 10 beeinträchtigen können.

Die Bezugsziffer 84 bezeichnet einen weiteren, hier ebenfalls nur schematisch dargestellten Widerstand 84. Der Widerstand 84 verbindet den Drain-Anschluß des Feldeffekttransistors 78 mit dem Bezugspotential Masse. In einer bevorzugten praktischen Realisierung ist der Widerstand 84 Bestandteil der im Schwellwertvergleicher 80 integrierten Filterschaltung. Dies ist jedoch nicht für alle Ausführungsbeispiele erforderlich. Dargestellt ist der Widerstand 84 hier im wesentlichen, um zu verdeutlichen, daß am Ausgang 24 des Schaltgeräts 12 ein auf das Massepotential bezogenes Schaltsignal anliegt, das mit Hilfe des Feldeffekttransistors 78 erzeugt wird. Im vorliegenden Ausführungsbeispiel besitzt das potentialbezogene Schaltsignal am Ausgang 24 entweder einen High-Pegel, der im wesentlichen der Betriebsspannung U_{B} entspricht, oder einen Low-Pegel, der im wesentlichen dem Massepotential entspricht.

Das Sicherheitsschaltgerät 14 besitzt eine zweite Auswerte- und Steuereinheit, die hier mit der Bezugsziffer 86 bezeichnet ist. Die Auswerte- und Steuereinheit 86 besitzt ebenfalls zwei diversitäre Mikroprozessoren 88a, 88b. Sie entspricht in ihrem Aufbau und ihrer Gesamtfunktion im Prinzip der Auswerte- und Steuereinheit 70 des ersten Sicherheitsschaltgerätes 12. Unterschiede bestehen im wesentlichen in der speziellen Auswertung der an die Eingänge anschließbaren Stellelemente. Außerdem ist die Auswerte- und Steuereinheit 86 hier vor allem im Hinblick auf ihre Beteiligung beim Einlesen des potentialbezogenen Schaltsignals dargestellt, während die Darstellung der Auswerte- und Steuereinheit 70 hier vor allem die Erzeugung dieses Schaltsignals betrifft.

Mit den Bezugsziffern 90 und 92 sind zwei zueinander redundante Eingangskreise bezeichnet, denen das am Eingang 32 anliegende potentialbezogene Schaltsignal parallel zueinander zugeführt ist. Das Schaltsignal selbst ist in der Fig. 2 mit der Bezugsziffer 94 bezeichnet.

Das Schaltsignal 94 besitzt hier einen statischen und einen dynamischen Signalanteil. Der statische Signalanteil ist der bereits angesprochene High-Pegel, mit dem u.a. auch die Schütze 50, 52 eingeschaltet werden. Der High-Pegel ist von kurzzeitigen negativen Impulsen der Dauer Tₚ unterbrochen, die mit Hilfe der Auswerte- und Steuereinheit 70 durch entsprechendes Tasten des Feldeffekttransistors 78 erzeugt werden. Die Impulsdauer Tₚ ist hier kürzer als die Abfallzeit der Schütze 50, 52, so daß die Schaltstellung der Schütze 50, 52 durch die Impulse nicht beeinflußt wird. Gemäß einem bevorzugten Ausführungsbeispiel sind die dem statischen Signalanteil überlagerten Impulse Abschaltimpulse, wie sie bei gattungsgemäßen Sicherheitsschaltgeräten mit Halbleiterausgängen bereits bekannt sind. Bei gattungsgemäßen Sicherheitsschaltgeräten werden die Abschaltimpulse verwendet, um die Abschaltfähigkeit des Sicherheitsschaltgeräts 12 intern überprüfen zu können.

Gemäß einem weiteren bevorzugten Ausführungsbeispiel erzeugt die Auswerte- und Steuereinheit 70 die Impulse nach einem vorgegebenen Schema im Sinne einer Pulscodemodulation und/oder Pulsdauermodulation. In einem Ausführungsbeispiel repräsentieren die einzelnen Impulsfolgen Zahlen, die zunächst kontinuierlich hoch und dann wieder heruntergezählt werden. Insgesamt kann das potentialbezogene Schaltsignal hierdurch mit einer redundanten Information versehen werden, die vom zweiten Sicherheitsschaltgerät 14 auf Plausibilität überprüft wird, um eine nochmals erhöhte Fehlersicherheit zu erreichen. Die erste Auswerte- und Steuereinheit 70 übernimmt hier insofern auch eine Modulatorfunktion.

Der erste Eingangskreis 90 des zweiten Sicherheitsschaltgerätes 14 beinhaltet einen Impulsdetektor, der allein die im Schaltsignal 94 enthaltenen Impulse auswertet. Bei jedem Impuls wird ein Interrupt ausgelöst, der in der Auswerte- und Steuereinheit 86 eine vorgegebene Interrupt-Routine startet. Der Eingangskreis 92 beinhaltet beim vorliegenden Ausführungsbeispiel demgegenüber einen Schwellwertvergleicher ähnlich dem Schwellwertvergleicher 80. Die Schaltschwelle des Schwellwertvergleichers 92 ist jedoch erheblich höher als diejenige des Schwellwertvergleichers 80, und sie entspricht im wesentlichen dem High-Pegel des Schaltsignals 94.

Die Funktionsweise der beiden Sicherheitsschaltgeräte 12 und 14 ist im Rahmen der Vorrichtung 10 wie folgt:

Im normalen Betrieb der überwachten Anlage, in dem Beispiel gemäß Fig. 1 also der hydraulischen Presse, erzeugt das Sicherheitsschaltgerät 12 das in Fig. 2 dargestellte Schaltsignal 94. Dieses besitzt einen statischen Signalanteil, der dem High-Pegel entspricht. Die Schütze 50, 52 sind dadurch eingeschaltet und der Pumpenantrieb 58 arbeitet. Das Sicherheitsschaltgerät 14 wertet mit Hilfe der beiden Eingangskreise 90, 92 sowie der Auswerte- und Steuereinheit 86 das Schaltsignal 94 aus und erzeugt an seinem Ausgang (hier nicht dargestellt) ein vergleichbares Schaltsignal. Dieses ist entsprechend Fig. 1 dem dritten Sicherheitsschaltgerät 16 zugeführt. Das Sicherheitsschaltgerät 16 erzeugt wiederum in vergleichbarer Weise ein weiteres Schaltsignal 94, aufgrund dessen die Schütze 60, 62 eingeschaltet sind, so daß auch das Ventil 64 geöffnet ist.

Wird nun der Not-Aus-Taster 20 betätigt oder erkennt die Auswerte- und Steuereinheit 70 einen internen Fehler des Sicherheitsschaltgerätes 12, sperrt die Auswerte- und Steuereinheit 70 den Feldeffekttransistor 78. Infolgedessen nimmt das Schaltsignal 94 einen stationären Low-Pegel an, was im Sicherheitsschaltgerät 14 mit Hilfe des Eingangskreises 92 festgestellt wird. Daraufhin sperrt die Auswerte- und Steuereinheit 86 die ihr zugeordnete Schaltelemente-Kombination (hier nicht dargestellt). Das Abschaltsignal wird dann an das dritte Sicherheitsschaltgerät 16 weitergegeben, das daraufhin die Schütze 60, 62 abschaltet. Damit ist die gesamte überwachte Anlage nach der Betätigung des Not-Aus-Tasters 20 abgeschaltet.

Wird anstelle des Not-Aus-Tasters 20 eine der beiden Schutztüren 30, 40 betätigt, schaltet das entsprechende daran angeschlossene Sicherheitsschaltgerät 14, 16 das an seinem Ausgang anliegende Schaltsignal auf den Low-Pegel. Dadurch werden wiederum alle nachfolgenden Komponenten der Kette abgeschaltet. Die dem aktivierten Sicherheitsschaltgerät vorausgehenden Komponenten, im Ausführungsbeispiel gemäß Fig. 1 also das Sicherheitsschaltgerät 12 sowie die Schütze 50, 52, bleiben jedoch eingeschaltet.

Den Erfolg des Abschaltvorgangs kann die Auswerte- und Steuereinheit 70 des ersten Sicherheitsschaltgerätes 12 einerseits mit Hilfe des Schwellwertvergleichers 80 und andererseits aufgrund der auf den Eingang 22 zurückgeführten Hilfskontakte 56 der Schütze 50, 52 überprüfen. Die Schaltstellung der Schütze 50, 52 wird hier also auch beim Abschaltvorgang anhand der Hilfskontakte überprüft. Dies erlaubt eine einfehlersichere Überwachung des Abschaltvorgangs am Ausgang des Sicherheitsschaltgerätes 12. Sollte bspw. der Feldeffekttransistor 78 trotz des Abschaltbefehls von der Auswerte- und Steuereinheit 70 das Potential am Ausgang 24 nicht auf Masse ziehen können, kann die Auswerte- und Steuereinheit 70 mit Hilfe des Relais 76 den Abschaltvorgang redundant bewirken. Damit ist sowohl der Abschaltvorgang als auch dessen Überwachung durchgehend zweikanalig.

Das Sicherheitsschaltgerät 14 wertet das Vorhandensein oder Nicht-Vorhandensein des Schaltsignals 94 ebenfalls zweikanalig aus. Insgesamt ist damit eine Einfehlersicherheit im Sinne der Kategorie 4 der EN 954-1 gewährleistet.

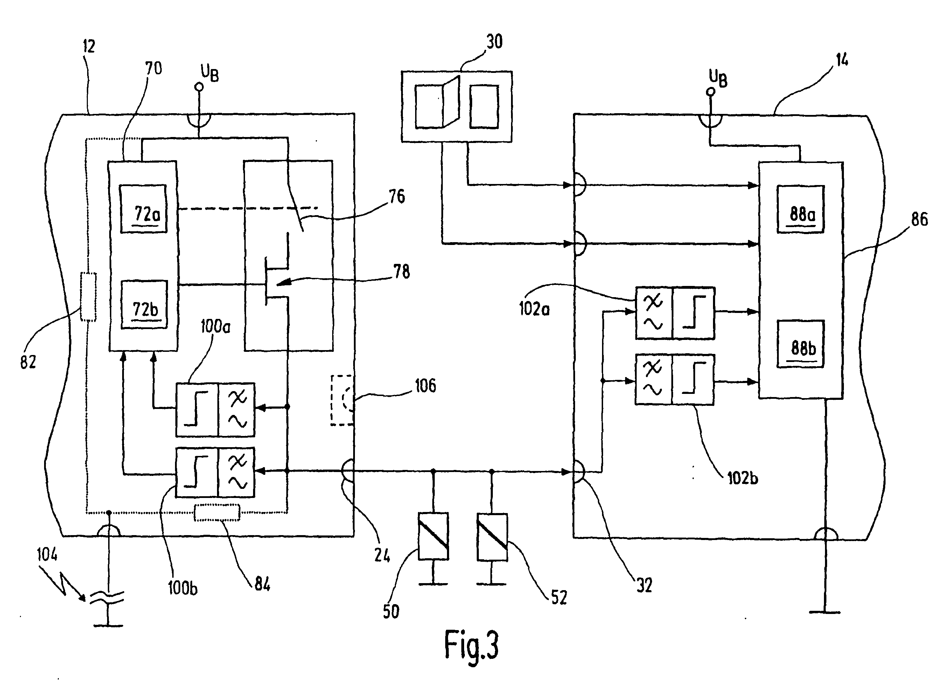

In Fig. 3 sind Details einer Realisierung dargestellt, die als solche nicht unter das Patent fällt.

Im Unterschied zu dem Ausführungsbeispiel gemäß Fig. 2 besitzt das erste Sicherheitsschaltgerät 12 hier zwei zueinander redundante Schwellwertvergleicher 100a, 100b. Ferner besitzt das zweite Sicherheitsschaltgerät 14 zwei Eingangskreise 102a, 102b, die ebenfalls jeweils einen Schwellwertvergleicher aufweisen. Die Schwellwertvergleicher 100a, 100b sind redundant zueinander auf eine Schaltschwelle abgestimmt, die geringfügig über, jedoch nahe bei 0 V liegt (in etwa gleich Massepotential). Die Schwellwertvergleicher in den Eingangskreisen 102a, 102b sind redundant zueinander auf eine Schaltschwelle abgestimmt, die in etwa dem High-Pegel des vom Sicherheitsschaltgerät 12 erzeugten Schaltsignals entspricht. Da beide Schwellwertüberwachungen zweikanalig ausgeführt sind, ist wiederum eine Einfehlersicherheit erreicht. Daher kann grundsätzlich sowohl auf die Erzeugung und Auswertung von dynamischen Signalanteilen, d.h. von dem Schaltsignal überlagerten Impulsen, als auch auf die Zurückführung der Hilfskontakte 56 der Schütze 50, 52 verzichtet werden. Diese in den Figuren 1 und 2 gezeigten Maßnahmen können jedoch auch in Ergänzung zu der in Fig. 3 dargestellten Realisierung verwendet werden. Des weiteren ist eine Kombination der hier gezeigten Alternativen möglich. Bspw. kann also in weiteren Ausführungsbeispielen das Sicherheitsschaltgerät 12 am Ausgang so aufgebaut sein, wie in Fig. 2 dargestellt, während der Eingang des Sicherheitsschaltgerätes 14 dem in Fig. 3 gezeigten entspricht. Des weiteren kann das Sicherheitsschaltgerät 12 am Ausgang der in Fig. 3 gezeigten Darstellung entsprechen, wobei mit Hilfe der Auswerte- und Steuereinheit 70 oder mit Hilfe eines hier nicht dargestellten Modulators die dynamischen Signalanteile im Schaltsignal erzeugt werden. Das Sicherheitsschaltgerät 14 entspricht dann der in Fig. 2 dargestellten Alternative.

Eine Einschränkung ergibt sich bei diesen verschiedenen Permutationen, wenn das Massepotential der Schütze 50, 52 mit dem Masseanschluß des Sicherheitsschaltgerätes 12 verbunden wird, wie dies in Fig. 2 dargestellt ist. Wenn in diesem Fall nämlich aufgrund eines Kabelbruchs, der in den Figuren 2 und 3 mit dem Pfeil 104 angedeutet ist, der Masseanschluß verloren geht, könnte über den Innenwiderstand 82 des Sicherheitsschaltgerätes 12 sowie über die Schütze 50, 52 ein Strom in den Eingang 32 des Sicherheitsschaltgerätes 14 fließen, und zwar selbst dann, wenn der Ausgang 24 des Sicherheitsschaltgerätes 12 abgeschaltet ist (Schaltsignal auf Low-Pegel). Hierdurch würden das Sicherheitsschaltgerät 14 und alle nachfolgenden Sicherheitsschaltgeräte nicht abschalten, obwohl das Sicherheitsschaltgerät 12 abgeschaltet hat. Dieser Fehler läßt sich abfangen, wenn die Schütze 50, 52 getrennt vom ersten Sicherheitsschaltgerät 12 mit dem Massepotential verbunden werden. Alternativ und/oder ergänzend läßt sich dieser Fehler auch abfangen, wenn dynamische Signalanteile im Schaltsignal 94 mit Hilfe des Impulsdetektors 90 ausgewertet werden.

Der Vollständigkeit halber sei abschließend erwähnt, daß das Sicherheitsschaltgerät 12 ebenso wie die weiteren Schaltgeräte 14, 16 mehrere einkanalige Ausgänge der hier beschriebenen Art aufweisen kann. Dies ist in den Figuren 2 und 3 anhand des schematisch dargestellten Ausgangs 106 angedeutet. An den Ausgang 106 können weitere Sicherheitsschaltgeräte und/oder weitere Schütze angeschlossen werden, die von der Auswerte- und Steuereinheit 70 unabhängig von denjenigen Komponenten angesteuert werden, die am Ausgang 24 angeschlossen sind.

Des weiteren ist es grundsätzlich möglich, die hier dargestellten Ausführungsbeispiele auch mit Realisierungen zu kombinieren, wie sie in der WO 01/67610 A1 gezeigt sind.

## Patentansprüche

1. Vorrichtung zum fehlersieheren Abschalten eines elektrischen Verbrauchers (58, 64), insbesondere in industriellen produktionsanlagen, mit einem ersten (12) und zumindest einem zweiten (14, 16) Sicherheitsschaltgerät, wobei das erste Sicherheitsschaltgerät (12) eine erste Auswerte- und Steuereinheit (70), einen Ausgang (24) und ein elektronisches Schaltelement (78) aufweist, das in Abhängigkeit von der ersten Auswerte- und Steuereinheit (70) ein potentialbezogenes Schaltsignal (94) an dem Ausgang (24) erzeugt, wobei das zweite Sicherheitsschaltgerät (14, 16) eine zweite Auswerte- und Steuereinheit (86) sowie einen Eingang (32, 42) aufweist, der mit der zweiten Auswerte- und Steuereinheit (86) und mit dem Ausgang (24) des ersten Sicherheitsschaltgeräts (12) verbunden ist, und wobei das erste (12) und das zweite (14, 16) Sicherheitsschaltgerät über eine einkanalige Verbindungsleitung (26) miteinander verbunden sind **dadurch gekennzeichnet, daß** das zweite Sicherheitsschaltgerät (14, 16) zumindest zwei Eingangskreise (90, 92; 102a, 102b) aufweist, denen das potentialbezogene Schaltsignal (94) des ersten Sicherheitsschaltgeräts (12) redundant zueinander zugeführt ist, wobei zumindest ein Eingangskreis einen Schwellwertvergleicher (92) und ein anderer Eingangskreis einen Impulsdetektor (90) aufweist.

2. Vorrichtung nach Anspruch 1, **dadurch gekennzeichnet, daß** das erste Sicherheitsschaltgerät (12) einen Modulator (70) aufweist, der das potentialbezogene Schaltsignal (94) mit einem statischen Signalanteil und einem dynamischen Signalanteil versieht.

3. Vorrichtung nach Anspruch 2, **dadurch gekennzeichnet, daß** der statische signalanteil ein positiver Signalpegel ist und daß der dynamische Signalanteil zumindest einen zyklisch wiederkehrenden Impuls beinhaltet, der den positiven Signalpegel verändert.

4. Vorrichtung nach einem der Ansprüche 1 bis 3, **dadurch gekennzeichnet, daß** die zumindest zwei Eingangskreise zumindest zwei zueinander redundante Schwellwertvergleicher (102a, 102b) aufweisen.

5. Vorrichtung nach einem der Ansprüche 1 bis 4, **dadurch gekennzeichnet, daß** das erste Sicherheitsschaltgerät (12) zumindest einen Schwellwertvergleicher (80; 100), bevorzugt zumindest zwei zueinander redundante Schwellwertvergleicher (100a, 100b), aufweist, dem bzw. denen eingangsseitig das potentialbezogene Schaltsignal (94) zugeführt ist und der bzw. die ausgangsseitg mit der ersten Auswerte- und Steuereinheit (70) verbunden ist/sind.

6. Vorrichtung nach einem der Ansprüche 1 bis 5, **dadurch gekennzeichnet, daß** an die einkanalige Verbindungsleitung (26) ferner zumindest zwei externe Schaltelemente (50, 52) angeschlossen sind.

7. Vorrichtung nach Anspruch 6, **dadurch gekennzeichnet, daß** die externen Schaltelemente (50, 52) elektromechanische Schaltelemente mit jeweils zumindest zwei durch eine Zwangsführung verbundenen Schaltkontakten (54, 56) sind,

8. Vorrichtung nach Anspruch 7, **dadurch gekennzeichnet, daß** jeweils einer der durch die Zwangsführung verbundenen Schaltkontakte (56) auf einen Eingang (22) des ersten Sicherheitsschaltgeräts (12) verbunden ist.

9. Vorrichtung nach einem der Ansprüche 6 bis 8, **dadurch gekennzeichnet, daß** die externen Schaltelemente (50, 52) getrennt von dem ersten Sicherheitsschaltgerät (12) mit einem Bezugspotential (Masse) verbunden sind.

10. Vorrichtung nach einem der Ansprüche 1 bis 9, **dadurch gekennzeichnet, daß** das zweite Sicherheitsschaltgerät (14, 16) zumindest einen weiteren Eingang (28, 38) zum Aufnehmen eines weiteren Schaltsignals sowie eine Verknüpfungseinheit (86) aufweist, die das weitere Schaltsignal mit dem potentialbezogenen Schaltsignal (94) logisch Verknüpft.

11. Vorrichtung nach einem der Ansprüche 1 bis 10, **dadurch gekennzeichnet, daß** das erste Sicherheitsschaltgerät (12) zumindest zwei Ausgänge (24, 106) aufweist, an denen in Abhängigkeit von der ersten Auswerte- und Steuereinheit (70) voneinander unabhängige potentialbezogene Schaltsignale erzeugbar sind.

12. Sicherheitsschaltgerät zur Verwendung in einer vorrichtung nach einem der Ansprüche 1 bis 11, mit einem Eingang (32) zum Aufnehmen eines potentialbezogenen Schaltsignals (94) und mit einer Auswerte- und Steuereinheit (86), die mit dem Eingang (32) verbunden ist, **dadurch gekennzeichnet, daß** zumindest zwei Eingangskreise (90, 92; 102a, 102b) vorhanden sind, denen das potentialbezogene Schaltsignal (94) von dem einen Eingang (32) redundant zueinander zugeführt ist, wobei zumindest ein Eingangskreis einen Schwellwertvergleicher (92) und ein anderer Eingangskreis einen Impulsdetektor (90) aufweist.

## Claims

1. An apparatus for failsafe disconnection of an electrical load (58, 64), in particular in industrial production systems, having a first (12) and at least one second (14, 16) safety switching device, with the first safety switching device (12) comprising a first evaluation and control unit (70), an output (24) and an electronic switching element (78), which produces a potential-related switching signal (94) at the output (24) as a function of the first evaluation and control unit (70), with the second safety switching device (14, 16) comprising a second evaluation and control unit (86) and an input (32, 42) which is connected to the second evaluation and control unit (86) and to the output (24) of the first safety switching device (12), and with the first (12) and the second (14, 16) safety switching devices being connected to one another via a single-channel connecting line (26), **characterized in that** the second safety switching device (14, 16) comprises at least two input circuits (90, 92; 102a, 102b) to which the potential-related switching signal (94) of the first safety switching device (12) is supplied redundantly with respect to one another, at least one input circuit having a threshold value comparator (92), and another input circuit having a pulse detector (90).

2. The apparatus of Claim 1, **characterized in that** the first safety switching device (12) comprises a modulator (70), which provides the potential-related switching signal (94) with a steady-state signal component and a dynamic signal component.

3. The apparatus of Claim 2, **characterized in that** the steady-state signal component is a positive signal level, and the dynamic signal component includes at least one cyclically repeated pulse which changes the positive signal level.

4. The apparatus of any one of Claims 1 to 3, **characterized in that** the at least two input circuits comprise at least two mutually redundant threshold value comparators (102a, 102b).

5. The apparatus of any one of Claims 1 to 4, **characterized in that** the first safety switching device (12) comprises at least one threshold value comparator (80; 100), preferably at least two mutually redundant threshold value comparators (100a, 100b), to whose input side or sides the potential-related switching signal (94) is supplied, and whose output side or sides is or are connected to the first evaluation and control unit (70).

6. The apparatus of any one of Claims 1 to 5, **characterized in that** at least two external switching elements (50, 52) are also connected to the single-channel connecting line (26).

7. The apparatus of Claim 6, **characterized in that** the external switching elements (50, 52) are electromechanical switching elements, each having at least two mutually interlocked switching contacts (54, 56).

8. The apparatus of Claim 7, **characterized in that** one of the interlocked switching contacts (56) is in each case connected to one input (22) of the first safety switching device (12).

9. The apparatus of any one of Claims 6 to 8, **characterized in that** the external switching elements (50, 52) are connected to a reference ground potential (ground) separately from the first safety switching device (12).

10. The apparatus of any one of Claims 1 to 9, **characterized in that** the second safety switching device (14, 16) comprises at least one further input (28, 38) for reception of a further switching signal, and comprises a logic unit (86) which logically interconnects the further switching signal and the potential-related switching signal (94).

11. The apparatus of any one of Claims 1 to 10, **characterized in that** the first safety switching device (12) comprises at least two outputs (24, 106) at which mutually independent potential-related switching signals can be produced as a function of the first evaluation and control unit (70).

12. A safety switching device for use in an apparatus of any one of Claims 1 to 11, having an input (32) for reception of a potential-related switching signal (94), and having an evaluation and control unit (86) which is connected to the input (32), **characterized in that** at least two input circuits (90, 92; 102a, 102b) are provided, to which the potential-related switching signal (94) is supplied from said input (32) redundantly with respect to one another, at least one input circuit having a threshold value comparator (92), and another input circuit having a pulse detector (90).

## Revendications

1. Dispositif destiné à déconnecter, de manière protégée contre les erreurs, un consommateur électrique (58, 64), en particulier dans les installations de production industrielles, comportant un premier dispositif de coupure de sécurité (12) et au moins un deuxième dispositif de coupure de sécurité (14, 16), le premier dispositif de coupure de sécurité (12) comportant une première unité d'analyse et de commande (70), une sortie (24) et un élément de commande électronique (78) qui, en fonction de la première unité d'analyse et de commande (70), génère à la sortie (24) un signal de commande (94) spécifique au potentiel, le deuxième dispositif de coupure de sécurité (14, 16) comportant une deuxième unité d'analyse et de commande (86), ainsi qu'une entrée (32, 42) qui communique avec la deuxième unité d'analyse et de commande (86) et avec la sortie (24) du premier dispositif de coupure de sécurité (12), et le premier (12) et le deuxième (14, 16) dispositif de coupure de sécurité étant reliés l'un à l'autre par l'intermédiaire d'une ligne de communication (26) à un canal, **caractérisé en ce que** le deuxième dispositif de coupure de sécurité (14, 16) comporte au moins deux circuits d'entrée (90, 92 ; 102a, 102b) vers lesquels le signal de commande (94) spécifique au potentiel délivré par le premier dispositif de coupure de sécurité (12) est acheminé par redondance réciproque, au moins un circuit d'entrée comportant un comparateur de valeur seuil (92) et un autre circuit d'entrée comportant un détecteur d'impulsion (90).

2. Dispositif selon la revendication 1, **caractérisé en ce que** le premier dispositif de coupure de sécurité (12) comporte un modulateur (70), par lequel le signal de commande (94) spécifique au potentiel est muni d'une composante statique et d'une composante dynamique.

3. Dispositif selon la revendication 2, **caractérisé en ce que** la composante statique du signal est un niveau de signal positif et **en ce que** la composante dynamique du signal contient au moins une impulsion à répétition cyclique, qui modifie le niveau de signal positif.

4. Dispositif selon l'une quelconque des revendications 1 à 3, **caractérisé en ce que** lesdits au moins deux circuits d'entrée comportent au moins deux comparateurs de valeur seuil (102a, 102b) à redondance réciproque.

5. Dispositif selon l'une quelconque des revendications 1 à 4, **caractérisé en ce que** le premier dispositif de coupure de sécurité (12) comporte au moins un comparateur de valeur seuil (80 ; 100), de préférence au moins deux comparateurs de valeur seuil (100a, 100b) à redondance réciproque, vers lequel ou lesquels est acheminé du côté entrée le signal de commande (94) spécifique au potentiel et lequel ou lesquels est/sont relié(s) du côté sortie à la première unité d'analyse et de commande (70).

6. Dispositif selon l'une quelconque des revendications 1 à 5, **caractérisé en ce que**, en outre, au moins deux éléments de commande externes (50, 52) sont raccordés à la ligne de communication (26) à un canal.

7. Dispositif selon la revendication 6, **caractérisé en ce que** les éléments de commande externes (50, 52) sont des éléments de commande électromécaniques comportant respectivement au moins deux contacts de commande (54, 56) reliés par un guidage forcé.

8. Dispositif selon la revendication 7, **caractérisé en ce que** respectivement l'un des contacts de commande (54, 56) reliés par guidage forcé est relié à une entrée (22) du premier dispositif de coupure de sécurité (12).

9. Dispositif selon l'une quelconque des revendications 6 à 8, **caractérisé en ce que** les éléments de commande externes (50, 52) sont reliés à un potentiel de référence (masse) en étant séparés du premier dispositif de coupure de sécurité (12).

10. Dispositif selon l'une quelconque des revendications 1 à 9, **caractérisé en ce que** le deuxième dispositif de coupure de sécurité (14, 16) comporte au moins une autre entrée (28, 38) destinée à recevoir un autre signal de commande, ainsi qu'une unité d'enchaînement (86), par laquelle l'autre signal de commande est enchaîné logiquement au signal de commande (94) spécifique au potentiel.

11. Dispositif selon l'une quelconque des revendications 1 à 10, **caractérisé en ce que** le premier dispositif de coupure de sécurité (12) comporte au moins deux sorties (24, 106), au niveau desquelles, en fonction de la première unité d'analyse et de commande (70), peuvent être générés des signaux de commande liés au potentiel, indépendants les uns des autres.

12. Dispositif de coupure de sécurité destiné à être utilisé dans un dispositif selon l'une quelconque des revendications 1 à 11, comportant une entrée (32) destinée à recevoir un signal de commande (94) spécifique au potentiel et comportant une unité d'analyse et de commande (86) qui communique avec l'entrée (32), **caractérisé en ce qu'**il est prévu au moins deux circuits d'entrée (90, 92 ; 102a, 102b), vers lesquels le signal de commande (94) spécifique au potentiel, délivré à l'une des entrées (32), est acheminé par redondance réciproque, au moins un circuit d'entrée comportant un comparateur de valeur seuil (92) et un autre circuit d'entrée comportant un détecteur d'impulsion (90).
